# FASCICULE DE BREVET EUROPEEN

(11) **EP 1 850 682 B1**
(45) Date de publication et mention de la délivrance du brevet: **05.08.2015**
(21) Numéro de dépôt: 05818972.1
(22) Date de dépôt: 28.11.2005
(51) Int. Cl.: C12G 1/00, A23L 1/236, A23L 2/60

(54) **PROCEDE DE TRAITEMENT D'UNE BOISSON EN VUE D'AUGMENTER SA SUCROSITE ET COMPOSE DESTINE A ETRE AJOUTE A UNE BOISSON EN VUE D'AUGMENTER SA SUCROSITE**
GETRÄNKEBEHANDLUNGSVERFAHREN ZUR VERSTÄRKUNG DESSEN SÜSSE SOWIE EINEM GETRÄNK ZUGEGEBENE VERBINDUNG ZUR VERSTÄRKUNG DESSEN SÜSSE
DRINK-TREATMENT METHOD WHICH IS USED TO INCREASE THE SWEETNESS THEREOF AND COMPOUND TO BE ADDED TO A DRINK IN ORDER TO INCREASE THE SWEETNESS OF SAME

(30) Priorité: 29.11.2004 FR 0452803
(43) Date de publication de la demande: 07.11.2007
(73) Titulaire: Sarco ZA, 33270 Floirac (FR)
(72) Inventeur: MOINE, Virginie, F-33210 BOMMES (FR)
(74) Mandataire: Fourcade, Emmanuelle
(86) Numéro de dépôt international: PCT/FR2005/050998
(87) Numéro de publication internationale: WO 2006/056725

(56) Documents cités:
- EP-A- 0 418 616
- WO-A-01/46380
- US-A1- 2004 101 934
- DATABASE BIOSIS [Online] BIOSCIENCES INFORMATION SERVICE, PHILADELPHIA, PA, US; 1996, GIBBS BERNARD F ET AL: "Sweet and taste-modifying proteins: A review" XP009049995 Database accession no. PREV199699189235 & NUTRITION RESEARCH, vol. 16, no. 9, 1996, pages 1619-1630, ISSN: 0271-5317
- MARCHAL ET AL.: "Influence of yeast macromolecules on sweetness in dry wines: role of the Saccharomyces cerevisiae protein Hsp12", JOURNAL OD AGRICULTURAL AND FOOD CHEMISTRY,

### SEQUENCE LISTING

<110> SARCO
<120> Procédé de traitement d'une boisson en vue d'augmenter sa sucrosité et composé destiné à être ajouté à une boisson en vue d'augmenter sa sucrosité.
<130> 13746wO
<150> FR04/52803
   <151> 2004-11-29
<160> 29
<170> PatentIn version 3.3
<210> 1
   <211> 16
   <212> PRT
   <213> saccharomyces cerevisiae
<400> 1
   Lys Ala Asp Lys Val Ala Gly Lys Val Gln Pro Glu Asp Asn Lys Gly
   1               5                   10                  15
<210> 2
   <211> 22
   <212> PRT
   <213> Saccharomyces cerevisiae
<400> 2
   Lys Glu Tyr Ile Thr Asp Lys Ala Asp Lys Val Ala Gly Lys Val Gln
   1               5                   10                  15
   Pro Glu Asp Asn Lys Gly
               20
<210> 3
   <211> 13
   <212> PRT
   <213> Saccharomyces cerevisiae
<400> 3
   Lys Ala Ser Glu Ala Leu Lys Pro Asp Ser Gln Lys Ser
   1               5                   10
<210> 4
   <211> 16
   <212> PRT
   <213> saccharomyces cerevisiae
<400> 4
   Asp Ala Val Glu Tyr Val Ser Gly Arg Val His Gly Glu Glu Asp Pro
   1               5                   10                  15
<210> 5
   <211> 26
   <212> PRT
   <213> Saccharomyces cerevisiae
<400> 5
   Lys Ala Ser Glu Ala Leu Lys Pro Asp Ser Gln Lys Ser Tyr Ala Glu
   1               5                   10                  15
   Gln Gly Lys Glu Tyr Ile Thr Asp Lys Ala
               20                  25
<210> 6
   <211> 15
   <212> PRT
   <213> Saccharomyces cerevisiae
<400> 6
   Tyr Val Ser Gly Arg Val His Gly Glu Glu Asp Pro Thr Lys Lys
   1               5                   10                  15
<210> 7
   <211> 14
   <212> PRT
   <213> Saccharomyces cerevisiae
<400> 7
   Lys Ala Asp Lys Val Ala Gly Lys Val Gln Pro Glu Asp Asn
   1 5 10
<210> 8
   <211> 20
   <212> PRT
   <213> saccharomyces cerevisiae
<400> 8
   Lys Ala Ser Glu Ala Leu Lys Pro Asp Ser Gln Lys Ser Tyr Ala Glu
   1 5 10 15
   Gln Gly Lys Glu
   20
<210> 9
   <211> 19
   <212> PRT
   <213> saccharomyces cerevisiae
<400> 9
   Asp Ala Val Glu Tyr Val Ser Gly Arg Val His Gly Glu Glu Asp Pro
   1 5 10 15
   Thr Lys Lys
<210> 10
   <211> 24
   <212> PRT
   <213> saccharomyces cerevisiae
<400>
   Lys Ala Asp Lys Val Ala Gly Lys Val Gln Pro Glu Asp Asn Lys Gly
   1 5 10 15
   Val Phe Gln Gly Val His Asp Ser
   20
<210> 11
   <211> 31
   <212> PRT
   <213> Saccharomyces cerevisiae
<400> 11
   Lys Gly Val Phe Gln Gly Val His Asp Ser Ala Glu Lys Gly Lys Asp
   1 5 10 15
   Asn Ala Glu Gly Gln Gly Glu Ser Leu Ala Asp Gln Ala Arg Asp
   20 25 30
<210> 12
   <211> 7
   <212> PRT
   <213> saccharomyces cerevisiae
<400> 12
   Lys Arg Val Phe Ile Arg Val
   1 5
<210> 13
   <211> 16
   <212> PRT
   <213> Saccharomyces cerevisiae
<400> 13
   Asp Lys Ile Ser His Val Ser Thr Gly Gly Gly Ala Ser Leu Glu Leu
   1 5 10 15
<210> 14
   <211> 26
   <212> PRT
   <213> saccharomyces cerevisiae
<400> 14
   Glu Val Val Lys Ser Ser Ala Ala Gly Asn Thr Val Ile Ile Gly Gly
   1 5 10 15
   Gly Asp Thr Ala Thr Val Ala Lys Lys Tyr
   20 25
<210> 15
   <211> 23
   <212> PRT
   <213> Saccharomyces cerevisiae
<400> 15
   Lys Ser Ser Ala Ala Gly Asn Thr Val Ile Ile Gly Gly Gly Asp Thr
   1 5 10 15
   Ala Thr Val Ala Lys Lys Tyr
   20
<210> 16
   <211> 11
   <212> PRT
   <213> Saccharomyces cerevisiae
<400> 16
   Arg Ile Val Ala Ala Leu Pro Thr Ile Lys Tyr
   1               5                   10
<210> 17
   <211> 11
   <212> PRT
   <213> Saccharomyces cerevisiae
<400> 17
   Ala Gly Glu Asn Phe His His Gly Asp Lys Leu
   1               5                   10
<210> 18
   <211> 12
   <212> PRT
   <213> Saccharomyces cerevisiae
<400> 18
   Phe Ala Gly Glu Asn Phe His His Gly Asp Lys Leu
   1               5                   10
<210> 19
   <211> 16
   <212> PRT
   <213> Saccharomyces cerevisiae
<400> 19
   Tyr Ala Arg Ser Val Tyr Asp Ser Arg Gly Asn Pro Thr Val Glu Val
   1               5                   10                  15
<210> 20
   <211> 18
   <212> PRT
   <213> Saccharomyces cerevisiae
<400> 20
   Asp Pro Glu Ala Ala Ala Ala Gly Ala Ala Ala Val Ala Asn Gln Gly
   1               5                   10                  15
   Lys Lys
<210> 21
   <211> 17
   <212> PRT
   <213> Saccharomyces cerevisiae
<400> 21
   Val Ser Leu Ala Ala Ser Arg Ala Ala Ala Ala Glu Lys Asn Val Pro
   1 5 10 15
   Leu
<210> 22
   <211> 13
   <212> PRT
   <213> saccharomyces cerevisiae
<400> 22
   Arg Ala Ile Gln Thr Ala Asn Ile Ala Leu Glu Lys Ala
   1 5 10
<210> 23
   <211> 21
   <212> PRT
   <213> saccharomyces cerevisiae
<400> 23
   Tyr Tyr Leu Asp Pro Glu Ala Ala Ala Ala Gly Ala Ala Ala Val Ala
   1 5 10 15
   Asn Gln Gly Lys Lys
   20
<210> 24
   <211> 14
   <212> PRT
   <213> Saccharomyces cerevisiae
<400> 24
   Lys Ala Gly Val Val Lys Gly Lys Thr Leu Leu Glu Ala Ile
   1 5 10
<210> 25
   <211> 14
   <212> PRT
   <213> Saccharomyces cerevisiae
<400> 25
   Tyr Lys Ile Gly Gly Ile Gly Thr Val Pro Val Gly Arg Val
   1 5 10
<210> 26
   <211> 19
   <212> PRT
   <213> Saccharomyces cerevisiae
<400> 26
   Val Gln Ala Val Ala Val Leu Lys Gly Asp Ala Gly Val Ser Gly Val
   1               5                   10                  15
   Val Lys Phe
<210> 27
   <211> 16
   <212> PRT
   <213> Saccharomyces cerevisiae
<400> 27
   Ser Lys Asn Leu Tyr Ser Asn Lys Arg Leu Leu Thr Ser Thr Asn Thr
   1               5                   10                  15
<210> 28
   <211> 12
   <212> PRT
   <213> saccharomyces cerevisiae
<400> 28
   Arg Arg Val Leu Leu Ser Ala Pro Leu Ser Lys Glu
   1               5                   10
<210> 29
   <211> 16
   <212> PRT
   <213> Saccharomyces cerevisiae
<400> 29
   Lys Asn Ala Lys Val Leu Glu Glu Asp Ala Pro Gly Tyr Lys Arg Glu
   1               5                   10                  15

## Description

L'invention a pour objet un procédé de traitement d'une boisson, destinée à la consommation d'un être humain ou animal, en vue d'augmenter une sucrosité de ladite boisson. Le procédé peut être utilisé pour le traitement de boissons alcoolisées comme pour le traitement de boissons non alcoolisées. Le procédé de l'invention peut notamment s'appliquer au traitement du vin. L'invention a également pour objet un composé édulcorant destiné à être utilisé pour le traitement d'une boisson dans le but d'augmenter sa sucrosité.

On connaît des agents de sapidité de différentes origines chimiques et biologiques couramment utilisés dans l'industrie agro-alimentaire, notamment pour conférer des caractéristiques organoleptiques à des boissons et des aliments. Par exemple l'aspartame est un agent sucrant d'origine peptidique utilisé en agro-alimentaire. Des protéines, telle que la thaumatine, peuvent également posséder de telles propriétés sucrantes (Gibbs et *al.,* 1996).

Certains peptides probablement d'origine levurienne (Desportes et al., 2001) et trouvés dans les vins de base de Champagne sont également cités comme possédant des propriétés organoleptiques telles que l'amertume, l'acidité et l'umami (saveur bouillon de boeuf).

Cependant ces peptides doivent être ajoutés à des doses importantes dans les boissons pour être détectés au niveau sensoriel. Par dose importante de peptide, on entend au moins égale à 5 g/L.

Dans le domaine réglementé des pratiques oenologiques, certains traitements sont admis afin d'améliorer les propriétés organoleptiques des vins, et parmi eux, la conservation sur lies.

Pendant la conservation sur lies, une multitude de phénomènes biochimiques et physico-chimiques se produisent dans le vin, tendant à en modifier les propriétés organoleptiques.

La conservation des vins blancs sur lies est une technique très ancienne utilisée lors de l'élevage en barrique des grands vins blancs notamment ceux de Bourgogne. Cette méthode d'élevage est maintenant pratiquée dans le monde entier. Les phénomènes biochimique et physico-chimique associés à cette pratique résultent d'interactions entre le vin, des levures et éventuellement le bois, et conduisent à l'amélioration des qualités organoleptiques et de la stabilité physico-chimique des vins blancs ainsi conservés.

Par exemple, les lies modifient l'arôme boisé des vins blancs. En particulier, l'arôme vanillé est moins intense dans des vins fermentés et conservés en barrique que lorsqu'ils sont entonnés après leur fermentation alcoolique et /ou conservé soutiré. Ce phénomène est du à la réduction de la vanilline par les levures contenues dans les lies (Chatonnet et al., 1992). Par ailleurs, la fermentation et la conservation en barrique peuvent également accroître les arômes toastés, par la production de furanmethanethiol par les lies à partir du furfural des bois chauffés (Tominaga et *al.,* 2000).

La conservation sur lies enrichit également les vins en polysaccharides d'origine pariétale, particulièrement en mannoprotéines (Llaubères et *al.,* 1987). II en résulte une amélioration spontanée de la stabilité protéique (Ledoux et *al*., 1992) et tartrique (Moine-Ledoux et *al.,* 1997) des vins. De plus, les polysaccharides libérés pendant la conservation sur lies peuvent se combiner avec les composés phénoliques du vin et les ellagitanins provenant de la barrique (Chatonnet et *al.,* 1992) . Ce collage naturel réalisé lors du batonnage des lies contribue à limiter l'évolution de la couleur des vins blancs mais aussi l'amertume des tanins du bois et préserve les vins du rosissement oxydatif.

De plus, grâce à leur pouvoir réducteur, les lies jouent un rôle clé dans les phénomènes d'oxydoréduction. Leur aptitude à consommer l'oxygène dissous a été récemment démontré par Fornairon et *al.,* 1999. En barrique leur présence est absolument nécessaire pour protéger de l'oxydation certains arômes fruités.

Dans le même temps, les lies préviennent le développement d'arômes oxydatifs caractéristiques du vieillissement aromatique défectueux (Lavigne-Cruège et *al.,* 1999). Le maintient d'un vin sur lies peut conduire à l'apparition d'odeurs soufrées désagréables, nécessitant un soutirage rapide. En effet, tant que l'activité sulfitoréductase demeure dans les levures, les vins blancs secs vinifiés en cuves de grande capacité ne peuvent pas être conservés sur lies, sans risquer de développer des défauts de réduction. Mais si les lies sont temporairement séparées du vin et conservées en barriques, elles pourront être réincorporées ensuite lorsqu'elles auront perdu leur activité réductrice. De plus, leur addition à ce stade provoque une diminution très sensible de la teneur en certains thiols volatils comme le méthanethiol ou l'ethanethiol. Des ponts disulfures entre les résidus cystéine constitutifs des mannoprotéines (localisées sur la couche externe de la paroi levurienne) et les groupements SH des thiols , ce qui permet ainsi la fixation des thiols par les levures (Lavigne et Dubourdieu, 1996).

Les multiples conséquences positives de l'élevage sur lies des vins blancs ont conduit certains vinificateurs à appliquer cette pratique pour l'élevage des vins rouges, en espérant obtenir des bénéfices sur le plan organoleptique, les lies étant censées apporter "gras et rondeur" aux vins, c'est-à-dire augmenter leur sucrosité.

Dans les vins rouges, l'élevage sur lies permet également de limiter les phénomènes d'oxydation tout en agissant, dans une certaine mesure, sur la texture des vins. Il a été rapporté dans la littérature (Escot et *al.* 2001) que des glycoprotéines d'origine pariétale, libérées au cours de l'autolyse des levures présentes dans les lies, semblent avoir une action sur certaines fractions polyphénoliques avec pour conséquence une diminution des sensations d'astringence liées à ces fractions.

De façon générale, il est connu de l'homme de l'art, que l'élevage sur lies des vins, rouges ou blancs, se traduit entre autres par une augmentation de la sucrosité desdits vins.

Cependant, il est peu aisé pour le praticien de gérer ces augmentations de la sucrosité. En effet, la maîtrise de l'élevage sur lies dépendant de multiples facteurs, tels que la durée, la température, la fréquence de batonnage, la structure colloïdale du vin etc.

Par ailleurs, la mise en oeuvre de cette technique est coûteuse, et n'est donc pas envisageable sur tous les vins. Enfin, cette technique ne s'applique généralement qu'aux boissons alcoolisées.

Dans l'invention, on cherche à fournir un procédé de traitement pouvant être appliqué à tout type de boisson, alcoolisée ou non, permettant d'augmenter la sapidité de la boisson, et plus précisément la sucrosité, de manière maîtrisée. Par de manière maîtrisée, on entend de manière à obtenir le niveau de sapidité souhaité, qui peut varier d'une boisson à une autre, selon les souhaits des consommateurs, les normes etc.

Pour cela, l'invention propose d'utiliser une préparation de levures inertées contenant un peptide particulier, dont un poids moléculaire est compris entre 0.5 et 3 kDa, afin d'amplifier la sensation de sucrosité d'une boisson à laquelle cette préparation est ajoutée. Cette préparation de levures inertées peut être obtenue par autolyse des levures présentent dans les lies de vin, comme par exemple des levures appartenant à l'espèce *Saccharomyces cerevisiae.*

L'utilisation de la préparation de levures inertées contenant le peptide d'intérêt est particulièrement intéressante pour le traitement des vins, blancs, rouges ou rosés. En effet, dans ce cas l'ajout de la préparation de levures inertées de l'invention correspond à l'ajout d'un produit oenologique autorisé par la législation.

L'utilisation de cette préparation de levures permet de traiter toutes sortes de boissons destinées à la consommation de l'être humain ou animal afin d'augmenter la sensation sucrée perçue lors de l'absorption de la boisson.

Bien entendu, il est possible d'utiliser la préparation de levures contenant le peptide édulcorant selon l'invention pour augmenter la sucrosité, ou plus généralement améliorer la sapidité, de toutes sortes de produits agro-alimentaires. La préparation de levures de l'invention peut notamment servir dans la préparation de plats cuisinés, de produits alimentaires à base de lait ou tout autre produit destiné à la grande distribution. La préparation de levures de l'invention contenant la fraction peptidique sapide d'intérêt peut également être utilisée comme édulcorant de table au même titre que l'aspartame ou autres édulcorants actuellement utilisés.

Dans le cas des boissons et aliments pour lesquels le cadre réglementaire l'autorise, il est possible d'ajouter directement la fraction peptidique sapide de l'invention, obtenue par exemple par synthèse chimique.

La fraction peptidique sapide selon l'invention a un seuil de perception très bas par rapport aux agents de saveurs actuellement utilisés dans l'industrie agro-alimentaire. Par seuil de perception, on entend la concentration minimum en cette fraction peptidique nécessaire pour que des consommateurs puissent la détecter. Ainsi, grâce à son pouvoir édulcorant, il est possible d'ajouter des faibles quantités de la préparation de levures inertées contenant ladite fraction peptidique dans un aliment ou une boisson pour obtenir une augmentation souhaitée de la sucrosité.

Il est également possible d'utiliser directement la fraction peptidique édulcorante, préalablement isolée à partir d'une préparation de levures inertées la contenant ou obtenue par synthèse chimique.

L'invention a donc pour objet un procédé de traitement d'une boisson destinée à la consommation d'un être humain ou animal en vue d'augmenter une sucrosité de ladite boisson, tel que défini par la revendication 1. Ce procédé peut répondre à l'une ou plusieurs des caractéristiques objet des revendications 2 à 6.

Par préparation de levures, on entend la fraction intracellulaire ainsi que les fragments de parois cellulaires desdites levures.

Par levures inertées par traitement enzymatique et/ou physico-chimique, on entend des levures ayant subit une autolyse avec ou sans enzymes exogènes. Les enzymes exogènes sont par exemple des β-1-3 glucanases et/ou des β-1-6 glucanases et/ou des protéases. Les levures peuvent également être inertées par un traitement physico-chimique, tel qu'un traitement acide, basique ou thermique, ces traitements s'ajoutant éventuellement au traitement enzymatique.

Par composé peptidique édulcorant, on entend un composé peptidique apte à augmenter la sucrosité de la solution à laquelle il est ajouté.

Plus précisément, la préparation de levures de l'invention contient un composé peptidique édulcorant de poids moléculaire égal à 2,750 kDa, +/-0.1 kDa.

La préparation de levures selon l'invention peut être ajoutée à la boisson sous forme de poudre, sous forme dissoute dans une solution ou autre.

Le composé peptidique édulcorant d'intérêt, présent dans la préparation de levures selon l'invention, présente un pic de rétention au temps 34 minutes sur une colonne HPLC Superdex peptide HR 10/30.

Le procédé de traitement selon l'invention s'applique aux boissons alcoolisées comme aux boissons non alcoolisées, dès lors qu'une saveur sucrée doit être conférée ou augmentée dans ladite boisson.

Dans un exemple particulier de mise en oeuvre du procédé de l'invention, on ajoute dans la boisson à traiter au moins 50g, +/- 10g, de préparation de levures inertées par hectolitre de boisson à traiter. Bien entendu, cette concentration peut être adaptée, c'est-à-dire être diminuée ou augmentée, par exemple selon le type de boisson et/ou le destinataire de la boisson.

Le composé édulcorant selon l'invention peut être ajouté à la boisson sous forme de poudre, sous forme dissoute dans une solution ou autre.

Il est possible d'ajouter une préparation comportant un mélange de plusieurs composés édulcorants, ayant chacun avec au moins l'une des séquences peptidiques SEQ ID N°1, SEQ ID N°2, SEQ ID N°3, SEQ ID N°4, SEQ ID N°5, SEQ ID N°6, SEQ ID N°7, SEQ ID N°8, SEQ ID N°9, SEQ ID N°10, SEQ ID N°11, au moins 95% ou mieux 98% de similarité.

L'invention a également pour objet un composé peptidique édulcorant d'origine levurienne, tel que défini par la revendication 7. Ce composé peut être conforme aux revendications 8 et 9.

Plus précisément, le composé peptidique édulcorant a un poids moléculaire égal à 2,750 kDa +/- 0.1 kDa.

Ce composé peptidique édulcorant peut notamment être obtenu par synthèse chimique, ou par extraction et purification à partir d'une préparation de levures inertées le contenant.

L'invention a également pour objet une préparation de levures inertées par traitement enzymatique et/ou physico-chimique, telle que définie par la revendication 10 ou la revendication 11.

La préparation de levures contient plus précisément un composé peptidique édulcorant présentant un poids moléculaire de 2,750 kDa +/- 0.1 kDa.

D'autres avantages et caractéristiques apparaîtront à la lecture des exemples qui suivent et qui font références aux figures en annexes dans lesquelles :
- les figures 1A et 1B montrent les résultats des mesures de l'évolution des DO respectivement à 254 nm (figure 1A) et à 280 nm (figure 1 B) dans un milieu d'autolyse de levures lorsque le milieu est enrichi ou non en enzymes exogènes ;
- la figure 2 montre l'évolution de la concentration, en g/l équivalent leucine, en composés azotés d'un milieu d'autolyse de levures lorsque le milieu est enrichi ou non en enzymes exogènes ;
- la figure 3 montre les résultats de différents tests triangulaires comparant des vins traités par addition de différentes préparations de levures inertées, à des vins non traités ;
- les figures 4A et 4B représentent les étalonnages moléculaires respectivement d'une colonne TSK S2000 sw (figure 4A) et d'une colonne Superdex Peptide HR 10/30 (figure 4B) en vue de leur utilisation pour la séparation des peptides dans une préparation peptidique contenant la fraction sapide d'intérêt et dans une préparation de levures inertées ;
- les figures 5A et 5B représentent les chromatogrammes par chromatographie liquide haute pression de la préparation peptidique contenant la fraction sapide d'intérêt respectivement sur TSK G2000 sw (figure 5A) et sur superdex Peptide HR 10/30 (figure 5B) ;
- les figures 6A et 6B représentent les chromatogrammes par chromatographie liquide haute pression d'une préparation de levures inertées respectivement sur TSK G2000 sw (figure 5A) et sur superdex Peptide HR 10/30 (figure 5B) ;
- la figure 7 représente le chromatogramme par chromatographie liquide haute pression de la fraction sapide d'intérêt sur C18RP.

### I- Identification de fractions sapides libérées lors de l'autolyse de levures.

Pour identifier des molécules ayant un pouvoir édulcorant, ou fraction sapide, les inventeurs ont utilisé dans leurs travaux des levures présentes dans les lies de vin.

Par autolyse, on entend la digestion des matériaux constituants des levures par l'action d'enzymes endogènes, c'est-à-dire d'enzymes propres aux dites levures.

L'identification des fractions sapides libérées lors de l'autolyse des levures est réalisée sur un milieu modèle d'autolyse. Le milieu modèle d'autolyse est obtenu à partir d'un milieu synthétique soumis à une fermentation alcoolique.

### 1.- Matériel

### 1.1.- Préparation du milieu synthétique

La composition du milieu synthétique est décrite dans le tableau I.

**Tableau I : Composition du milieu synthétique**

| | **Concentration (g/l)** |
|---|---|
| Glucose (VWR) | 100 |
| Fructose (VWR) | 100 |
| Acide tartrique (VWR) | 3 |
| Acide citrique (VWR) | 0.3 |
| Acide (L-)malique (Sigma) | 0.3 |
| Phosphate de potassium (VWR) | 2 |
| Sulfate de magnésium (VWR) | 0.2 |
| Sulfate d'ammonium (Sigma) | 0.3 = 63.6 mg N |
| Asparagine (Sigma) | 0.6 = 127.2 mg N |
| Méso-inositol (VWR) | 0.3 |

| **Solution d'oligo-éléments concentrée 1000 fois** | **Concentration finale en mg/l** |
|---|---|
| MnSO₄, 7 H₂O (Sigma) | 4 |
| ZnSO₄, 7 H₂O (Sigma) | 4 |
| CuSO₄, 5 H₂O (Sigma) | 1 |
| KI (iodure de potassium) (Sigma) | 1 |
| CoCl, 6 H₂O (Sigma) | 0.4 |
| (NH4)₆Mo₇O₂₄, 4 H₂O (Sigma) | 1 |
| H₃BO₃ (acide borique) (Sigma) | 1 |

| **Solution de vitamines concentrée 1000 fois** | **Concentration finale en mg/l** |
|---|---|
| Biotine (Sigma) | 40 µg |
| Thiamine (Sigma) | 1 |
| Pyrioxine (Sigma) | 1 |
| Acide nicotinique (Sigma) | 1 |
| Acide pantothénique (Sigma) | 1 |
| Acide para-aminobenzoïque (Sigma) | 1 |

| **Solution d'acide gras concentrée 1000 fois** | **Concentration finale en µg/l** |
|---|---|
| C 16 acide palmitique (Sigma) | 100 |
| C 16-1 acide palmitoléique (Sigma) | 20 |
| C 18 acide stéarique (Sigma) | 300 |
| C 18-1 acide oléique (Sigma) | 50 |
| C 18-2 acide linoléique (Sigma) | 50 |
| C 18-3 acide linolénique (Sigma) | 20 |

Toute la verrerie utilisée au cours de la préparation de ce milieu synthétique, ainsi que le système de filtration sont préalablement autoclavés 10 minutes, à 105°C.

Dans un premier temps, les sucres, les acides, les sources azotées, le phosphate de potassium, le sulfate de magnésium, le méso-inositol ainsi que les solutions de vitamines et d'oligo-éléments sont dissous dans de l'eau milliQ (Millipore). Le pH est ajusté à 3,3, avec de l'hydroxyde de potassium 4N (VWR).

Du SO₂ est additionné à la teneur de 2 g/hl.

Le mélange obtenu est filtré stérilement sur une membrane en ester de cellulose de 0,45 µM (Pall).

Parallèlement, le volume de solution d'acides gras nécessaire est additionné de 0,5 g/l de cellulose (Granucell, Laffort OEnologie) puis dissous dans 100 ml d'éthanol.

Cette suspension est évaporée à sec au rota-vapor. La poudre blanche obtenue (cellulose sur laquelle sont fixés les acides gras) est dissoute dans le milieu synthétique filtré. La turbidité du milieu est alors de 150 NTU.

### 1. 2 - Préparation du milieu d'autolyse

Le milieu synthétique est ensemencé avec 10 g/hl de *Saccharomyces cerevisiae* souche « Montrachet » 522 Davis (Levures Sèches Actives : Actiflore cerevisiae, Laffort OEnologie). Les fermentations se déroulent en ballons de 6 litres. Les levures sont oxygénées régulièrement, grâce à un bullage vif d'air comprimé. La teneur en sucres réducteurs résiduels en fin de fermentation est estimée par la méthode « Clinitest » (Bayer).

A l'issu de la fermentation alcoolique, les levures sont remises en suspension dans le milieu synthétique fermenté qui est séparé en deux modalités conduites en triplicata.

Une première modalité consiste en un milieu d'autolyse dépourvu d'enzyme exogène.

Une seconde modalité consiste en un milieu d'autolyse additionné de 5 g/hL d'enzymes exogènes. Les enzymes exogènes sont un mélange de protéases et de glucanases.

L'autolyse se déroule 30°C, à l'abri de la lumière, pendant 6 mois avec une remise en suspension hebdomadaire des lies.

L'échantillonnage pendant l'autolyse a été réalisé après 11, 42, 88, 123 et 148 jours d'autolyse. Les levures sont séparées du milieu par centrifugation (4500g, 10 mn). Le surnageant est ensuite analysé.

### 2- Méthodes d'analyse utilisées pour l'identification des fractions sapides au cours de l'autolyse

### 2.1- Mesure des densités optiques des produits d'autolyse à 280 nm et 254 nm.

Après dilution, la densité optique des surnageant d'autolyse est mesurée à 280 et 254 nm dans des cellules en quartz sous 1 cm de parcours optique par rapport à de l'eau distillé.

### 2.2- Dosage des composés azotées

Les composés azotés dans les surnageants d'autolyse sont dosés par la méthode colorimétrique à la ninhydrine (Rosen, 1957).

### 2.3- Fractionnement des molécules selon leur taille

Les lies sont éliminées des milieux modèles d'autolyse par centrifugation et les surnageants sont soumis à trois ultrafiltrations tangentielles successives sur un module Minitan™ (Millipore) aux seuils de coupures de 10, 3 et 0,5 kDa, afin d'être fractionnés.

Le produit à filtrer est poussé dans le module d'ultrafiltration tangentielle par une pompe Beckman de type 112. Les filtrations se font à la température du laboratoire (23°C). Les rétentats sont dialysés à 500 Da (Spectra/Por® CE [cellulose ester]) pour les dessaler et éliminer les plus petites molécules puis ils sont lyophilisés et conservés à - 18°C.

### 2.4- Evaluation sensorielle

Afin d'identifier la ou les fractions sapides issues des milieux d'autolyse, et de les recouper avec les fractions moléculaires issues du fractionnement des lies, deux dégustations sont réalisées en parallèle.

Chaque dégustation consiste en un test triangulaire. Le test triangulaire consiste à présenter trois échantillons codés à un sujet. Deux échantillons sont identiques et le troisième est différent. Le sujet doit repérer l'échantillon différent. Après une interprétation statistique des résultats, les différences significatives sont déterminées selon les seuils de 5, 1 ou 0,1%.

Une première dégustation oppose les trois fractions moléculaires, issues du fractionnement des lies purifiées, à une solution synthétique.

La solution synthétique est une solution hydroalcoolique comportant 1.5 g/L d'acide tartrique; 1.5 g/L d'acide malique; de l'éthanol 12% (v/v). Le pH de la solution hydroalcoolique est à 3.5 (par ajout de NaOH 1M). La solution hydroalcoolique est titrée à 12% v/v de manière à mimer le pourcentage d'alcool dans le vin.

Une seconde dégustation oppose les différents produits d'autolyse, selon le milieu d'autolyse, c'est-à-dire avec ou sans enzyme exogène.

### 2.5- Identification du seuil de perception de la saveur sucrée.

La recherche d'un seuil de perception, ou de détection, de la saveur sucrée consiste à présenter à un sujet un échantillon ayant une concentration donnée en composant sucrant. Le sujet doit alors déterminer si cet échantillon est différent ou non d'un témoin.

Un modèle mathématique est associé à la variation des fréquences de réponses correctes en fonction de la concentration en composé édulcorant.

Le seuil de perception est défini comme étant la concentration à partir de laquelle 50% des dégustateurs détectent systématiquement la présence de la substance.

Les réponses sont obtenues à l'aide d'une série de tests triangulaires.

Une gamme de cinq concentrations du composé édulcorant dont le seuil de perception doit être estimé est préalablement déterminée en laboratoire. Cette gamme de concentrations est ensuite soumise à un jury de dégustateurs. Un test triangulaire est préparé pour chacune des concentrations à tester. Les échantillons sont présentés au jury selon un ordre croissant de concentrations.

### 3- Résultats

### 3.1- Evolution de la quantité de substances libérées au cours de l'autolyse .

Les substances libérées au cours de l'autolyse étant principalement des protéines ou peptides et des acides nucléiques, leur libération dans le milieu a été suivi par la mesure respective de l'évolution des densités optiques à 280 et 254nm.

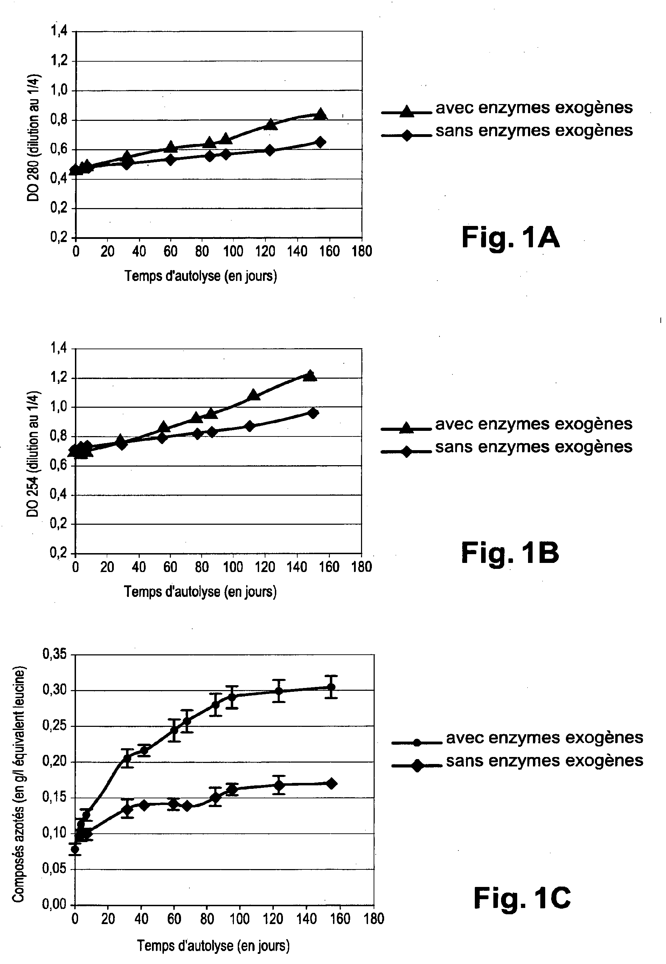

Les résultats sont représentés aux figures 1A et 1B.

En comparant l'augmentation de la densité optique dans le milieu d'autolyse dépourvu d'enzyme exogène avec la densité otique dans le milieu d'autolyse comportant des enzymes exogènes, on constate une augmentation plus rapide de la DO, que ce soit à 254nm ou à 280nm, dans le milieu d'autolyse enrichi en enzymes exogènes. Cette augmentation plus rapide de la DO dans le milieu d'autolyse enrichi en enzymes exogènes devient significative à partir du troisième prélèvement, c'est-à-dire à partir du 88ème jour d'autolyse.

L'augmentation des densités optiques à 280 et 254 nm est d'environ 43% lors du dernier prélèvement, par rapport à la densité optique avant l'autolyse, dans les milieux d'autolyse traités avec 5 g/hl d'enzymes exogènes.

### 3.2- Evolution des concentrations en composés azotés

Le résultat des dosages des composés azotés libérés au cours de l'autolyse, en présence ou en absence d'enzymes exogènes, est représenté à la figure 2.

Au bout de 160 jours d'autolyse, la concentration en composés azotés est de 0.3 g/L équivalent leucine dans le milieu d'autolyse enrichi en enzymes exogènes contre environ 0.16 g/L équivalent leucine dans le milieu d'autolyse dépourvu d'enzyme exogène. Ces résultats confirment donc ceux obtenus lors de la mesure de l'évolution de la densité optique

La présence d'enzymes exogènes dans le milieu d'autolyse a donc un effet positif sur la libération des molécules d'origine levurienne dans le milieu d'autolyse. Par effet positif, on entend que la quantité de molécules libérées dans le milieu est plus rapide et importante.

### 3.3- Résultats des tests triangulaires.

Les tests triangulaires ont été réalisés pour permettre l'évaluation sensorielle des fractions moléculaires libérées au cours de l'autolyse, en présence ou en l'absence d'enzyme.

Pour cela, un fractionnement a été réalisé respectivement sur le milieu d'autolyse dépourvu d'enzyme exogène et sur le milieu d'autolyse enrichi en enzymes exogènes,après 154 jours.

Les teneurs en composés azotés de ces différentes fractions dans les deux milieux, à 154 jours, sont rassemblés dans le tableau I ci-dessous.

**Tableau I : teneurs en composés azotés des différentes fractions**

| | Milieu d'autolyse sans enzyme exogène | | | Milieu d'autolyse enrichi en enzymes exogènes | | |
|---|---|---|---|---|---|---|
| Fractions | > 10 kDa | 3-10 kDa | 0, 5-3 kDa | > 10 kDa | 3-10 kDa | 0,5 -3 kDa |
| Composés azotés (mg/L) | 60 | 10 | 110 | 90 | 20 | 200 |

### 3.3.1- Première évaluation sensorielle : identification de la fraction sapide.

La première évaluation sensorielle est composée de trois tests triangulaires opposant les fractions purifiées issues de l'autolyse en présence d'enzymes, à la solution synthétique hydroalcoolique seule.

Les résultats sont représentés dans le tableau II ci-dessous.

**Tableau II : Résultats d'analyse sensorielle des trois fractions moléculaires isolées opposées à la solution hydroalcoolique synthétique seule.**

| Modalités opposées | Fraction 0,5-3 kDa | Fraction 3-10 kDa | Fraction > 10 kDa |
|---|---|---|---|
| Nombre de dégustateurs | 7 | 7 | 7 |
| % de bonnes réponses | 100 | 43 | 14 |
| Différences significatives | Oui (seuil de 0,1%) | Non | Non |

Ces tests montrent que seule la fraction comprise entre 0,5 et 3 kDa est différenciée d'un point de vu gustatif de la solution synthétique par 100% des dégustateurs, à une concentration de 200 mg/L.

Les molécules de taille supérieure à 10 KDa n'ont pas de fonction organoleptique.

### 3.3.2- Deuxième évaluation sensorielle : seuil de détection de la fraction sapide

A partir des résultats de la première évaluation sensorielle, on a cherché à savoir à partir de quel seuil la fraction sapide comprise entre 0,5 et 3 kDa est détectée. Le seuil de perception de cette fraction sapide a été recherché en enrichissant la solution synthétique hydroalcoolique en concentrations croissantes de la fraction sapide d'intérêt.

Les résultats de ce test sont représentés au tableau III.
1 signifie que le dégustateur a donné une bonne réponse au test triangulaire ;
0 signifie que le dégustateur n'a pas donné de bonne réponse au test triangulaire.

**Tableau III : Résultats des tests triangulaires de détermination du seuil de perception de la fraction sapide.**

| Dégustateurs | 2 mg/L | 4 mg/L | 8 mg/L | 16 mg/L | 32 mg/L |
|---|---|---|---|---|---|
| 1 | 1 | 1 | 1 | 1 | 1 |
| 2 | 0 | 0 | 0 | 0 | 1 |
| 3 | 1 | 0 | 1 | 1 | 1 |
| 4 | 0 | 1 | 0 | 1 | 1 |
| 5 | 0 | 0 | 0 | 0 | 1 |
| 6 | 0 | 0 | 1 | 1 | 1 |
| 7 | 1 | 0 | 0 | 0 | 1 |
| 8 | 0 | 0 | 1 | 0 | 0 |
| total | 3 | 2 | 4 | 4 | 7 |

La fraction sapide est détectée par 50% des dégustateurs dès une concentration de 16 mg/L. En effet, une bonne réponse n'est considérée comme pertinente que si les dégustateurs concernés continuent par la suite, pour des concentrations croissantes, de donner des réponses justes. Pour une concentration de 32 mg/L, 70% des dégustateurs détectent la présence de la fraction sapide. Le seuil de détection est donc particulièrement bas par rapport aux molécules sapides de l'état de la technique actuellement utilisées dans le domaine agro-alimentaire.

### 3.3.3- Troisième évaluation sensorielle : comparaison des propriétés organoleptiques de la fraction sapide issue du milieu d'autolyse dépourvu d'enzyme exogène et de la fraction sapide issue du milieu d'autolyse enrichi en enzymes exogènes.

Après avoir montré qu'une seule des fractions isolées est sapide, nous vérifions si les molécules issues du fractionnement entre 0,5 et 3 kDa produites dans les deux milieux d'autolyse, avec ou sans enzyme exogène, possèdent les mêmes propriétés organoleptiques.

Pour cela, un test triangulaire est réalisé, opposant les deux fractions sapides. Les résultats de ce test sont représentés au tableau IV.

**Tableau IV : Résultats des tests triangulaires comparant la sapidité de chacune des deux fractions issues respectivement du milieu d'autolyse avec et du milieu d'autolyse sans enzyme exogène.**

| Fractions sapides opposées pour le test traingulaire | Fraction 0,5-3 kDa issuse de l'autolyse sans enzyme exogène / Fraction 0,5-3 kDa issue de l'autolyse avec enzymes exogènes |
|---|---|
| Nombre de dégustateurs | 10 |
| % de bonnes réponses | 30 |
| Différences significatives | Non |

Les fractions sapides issues des deux milieux d'autolyse ne sont donc pas différenciables d'un point de vue organoleptique. Elles sont donc équivalentes.

Grâce à ces tests successifs, la sapidité de la fraction de poids moléculaire compris entre 0,5 et 3 kDa est démontrée.

### 3.3.4- Quatrième évaluation sensorielle : confirmation de la nature peptidique de la fraction d'intérêt et de ses propriétés organoleptiques

Afin de confirmer la nature peptidique de la fraction sapide, on soumet ladite fraction de poids moléculaire compris entre 0,5 et 3 kDa à une protéase non spécifique, la protéinase K.

Après hydrolyse, la protéinase K est éliminée par ultrafiltration et les substances résiduelles sont récupérées et mises en solution dans une solution hydroalcoolique synthétique.

Un test triangulaire est réalisé à partir de cette solution enrichie en substances résiduelles. Le résultat du test triangulaire est représenté au Tableau V ci-dessous.

**Tableau V : Résultat d'analyse sensorielle opposant une solution hydroalcoolique synthétique enrichie en la fraction moléculaire de poids moléculaire 0,5-3 kDa après hydrolyse par la protéinase K à une solution hydroalcoolique synthétique non enrichie.**

| | |
|---|---|
| Modalités opposées | Solution hydrolcoolique synthétique enrichie en fraction 0,5-3 KDa après digestion par la protéinase K / Solution hydrolcoolique synthétique non enrichie |
| Nombre de dégustateurs | 13 |
| % de bonnes réponses | 54 |
| Différences | Non |
| significatives | |

Les résultats de ce test montrent qu'il n'y a pas de différence significative d'un point de vue organoleptique entre les deux solutions. En effet, l'analyse statistique de ces résultats montre qu'au seuil de signification de 5 % il faut, pour 13 dégustateurs, au moins 61% de bonnes réponses pour que la différence soit considérée comme significative, du fait du pourcentage de réponses justes dues au hasard. De même, au seuil de signification de 1 % il faut, pour 13 dégustateurs, au moins 69% de bonnes réponses, et au seuil de signification de 0.1 % il faut, pour 13 dégustateurs, au moins 77% de bonnes réponses.

Ce test permet de confirmer que la fraction moléculaire sapide est d'origine peptidique, puisqu'elle est digérée par la protéinase K.

Ce test permet par ailleurs de montrer qu'une fois les composés peptidiques hydrolysés, la fraction 0,5-3 kDa n'est plus différenciée. La fraction sapide perd ses propriétés organoleptiques lorsqu'elle est hydrolysée.

### II- Identification de la présence de la fraction sapide comprise entre 0,5-3 KDa dans les préparations de levures inertées.

Une fois la fraction sapide identifiée et isolée, on a cherché à vérifier la présence de cette fraction sapide directement dans des préparations de levures inertées. Un des buts est de savoir si la fraction peptidique d'intérêt conserve son pouvoir organoleptique lorsqu'elle n'est pas isolée.

### 1- Identification de la fraction sapide dans des préparations de levures inertées.

Afin d'identifier la fraction peptidique comprise entre 0.5 et 3 kDa dans des extraits de levures, on utilise une méthode d'analyse des peptides par HPLC de tamisage moléculaire. Une telle analyse est conduite en parallèle sur des préparations de levures inertées et sur la fraction peptidique d'intérêt purifiée.

Les préparations de levures inertées et la fraction sapide purifiée sont séparées selon leur poids moléculaire sur deux types de colonnes, respectivement TSK G2000sw et Superdex Peptide HR 10/30, en chromatographie liquide haute performance (Spectrasytem AS 1000). La zone de fractionnement est de 10 à 70 kDa pour les protéines globulaires pour la première colonne et de 100 à 7000 Da pour la seconde colonne.

Les conditions de séparation sont les suivantes :
TSK G 2000 sw
   Volume d'injection 100µl
   Eluant NaCl 0.1 M
   Débit : 0.6 ml/mn
SuperdexPeptide HR10/30
   Volume d'injection 50 µl
   Eluant 0.1 M
   Débit 0.5 ml/mn
La détection est réalisée en UV à 200 nm.

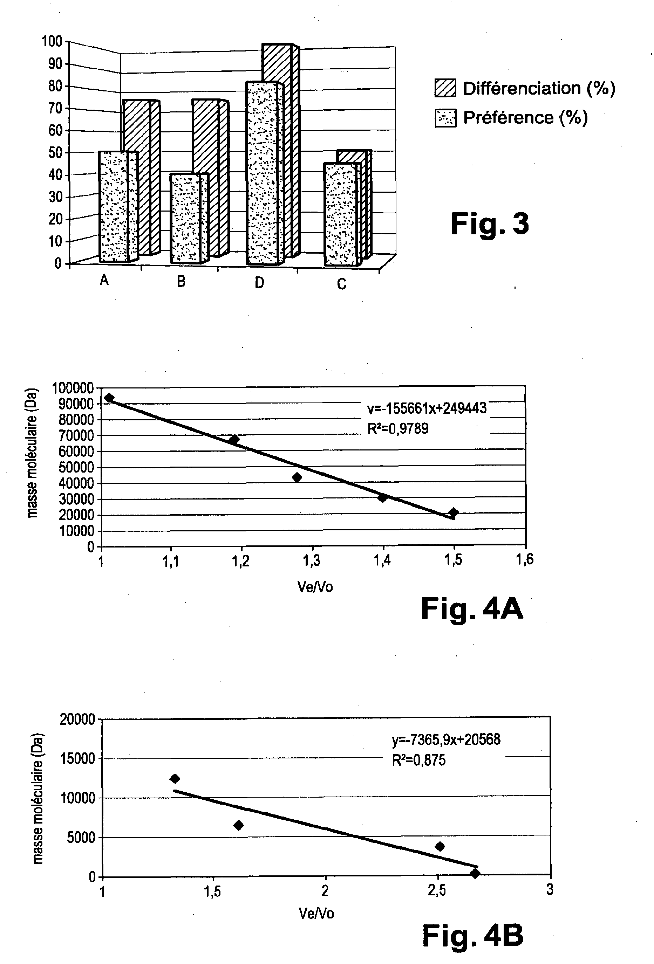

L'étalonnage des 2 colonnes est réalisé avec un mélange de protéines de différentes tailles moléculaires permettant d'établir une courbe pour chaque colonne (voir les figures 4A et 4B)

L'étalonnage moléculaire de la colonne TSK G 2000 sw (figure 4A) est réalisé comme suit :

| | |
|---|---|
| 94 000 : | phosphorylase B |
| 67 000 : | sérum albumine bovine |
| 43 000 : | ovalbumine |
| 30 000 : | anhydrase carbonique |
| 12 500 : | cytochrome C |

L'étalonnage moléculaire de la colonne Superdex Peptide HR 10/30 (figure 4B) est réalisé comme suit :

| | |
|---|---|
| 200000 : | blue dextran |
| 12 500 : | cytochrome C |
| 65000 : | Aprotinine |
| 3500 : | fragment d'insuline |
| 300: | gluthation |

### 2- Résultats d'identification

La fraction sapide identifiée est analysée par HPLC suivant les deux méthodes décrites ci-dessus.

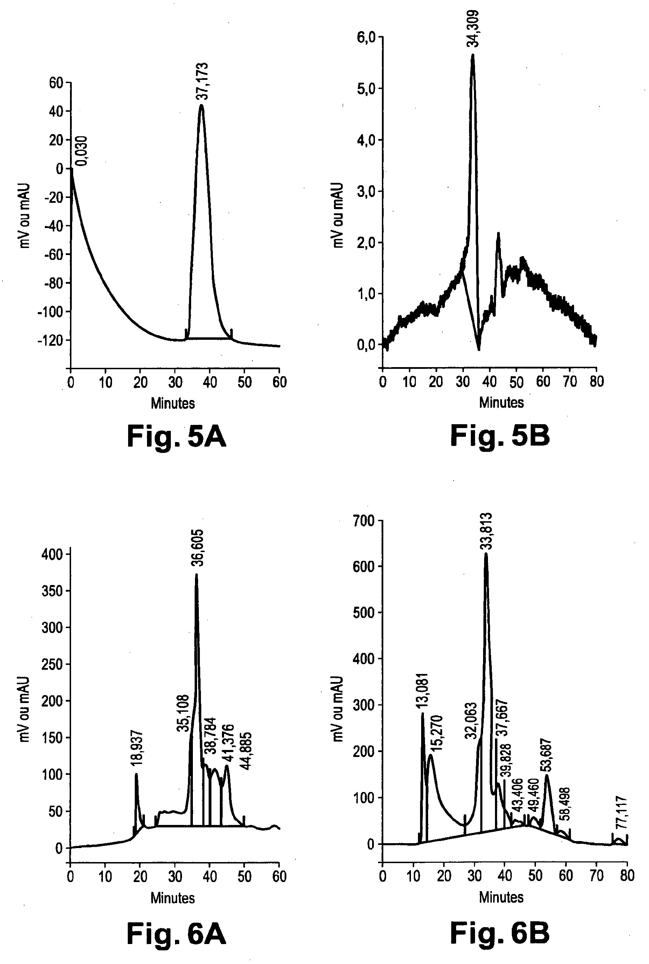

Sur les figures 5A et 5B, on peut voir les résultats de l'analyse par HPLC de tamisage moléculaire de la fraction peptidique sapide purifiée respectivement sur TSK G2000sw (figure 5A), et sur Superdex Peptide HR 10/30 (figure 5B).

Le temps de rétention caractéristique de la fraction peptidique sapide purifiée est de 37 minutes sur la colonne TSK G2000sw et de 34 minutes sur la colonne Superdex Peptide HR 10/30, correspondant à la masse moléculaire décrite précédemment, inférieure à 3 kDa, soit environ 2,750 kDa. Par environ 2,750 kDa, on entend 2,750 kDa plus ou moins 0.1 kDa.

Les différentes préparations de levures inertées sont alors analysées par HPLC. La comparaison d'un des profils obtenus (figures 6A et 6B) avec celui de la fraction peptidique sapide purifiée montre la présence, dans tous les types de préparations de levures analysés, de la fraction au temps de rétention de 37 minutes (figure 6A) et de 34 minutes (figure 6B). Le peptide correspondant au temps de rétention 37 ou 34 minutes dans la préparation de levure a un poids moléculaire d'environ 2,750 kDa.

Ainsi, la présence de la fraction peptidique sapide est confirmée dans les préparations de levures inertées.

Les méthodes d'analyse par HPLC peuvent permettre de contrôler l'efficacité de production de préparations de levures inertées. Il est possible d'utiliser de façon systématique ces méthodes d'analyse, comme test de contrôle qualité des péparations de levures inertées. La présence d'un pic au temps de rétention de 34 minutes sur la colonne Superdex Peptide HR 10/30 certifie la présence de la fraction peptidique sapide (de 2.750 kDa) dans la préparation analysée.

### 3- Production de préparation de levures inertées aptes à augmenter la sucrosité d'une boisson.

On a cherché ici à savoir si la qualité des caractéristiques organoleptiques de la fraction peptidique selon l'invention peut varier selon les levures utilisées, et/ou selon le traitement auquel les levures sont soumises.

On a réalisé quatre préparations différentes de levures inertées. Les préparations A, B, C et D correspondent aux traitements suivants :
Préparation A : levures BO213 inertées par un procédé physico-chimique ;
Préparation B : levures 522D inertées par un procédé physico-chimique;
Préparation C : levures 522D inertées par un procédé enzymatique ;
Préparation D : levures VL3C inertées par un procédé physico-chimique.

A l'issu de leur production, l'impact sensoriel de ces différentes préparations est mesuré par des tests de dégustation triangulaire opposant des vins additionnés de ces préparations de levures inertées et les mêmes vins témoins non traités. Le jury de dégustateurs est composé de 15 personnes.

Un exemple de ces résultats est décrit à la figure 3.

L'analyse statistique de ces dégustations triangulaires montre que pour le jury le seuil de différenciation significatif est atteint à partir de 78% de réponses exactes. Ce seuil n'est atteint que lors de l'addition de la préparation D de levures inertées. Dans ces conditions 100% des dégustateurs préfèrent le vin traité.

La fraction peptidique édulcorante est également présente dans les préparations de levures inertées A, B et C. Cependant, les concentrations respectives en la fraction peptidique édulcorante dans ces préparations est insuffisante pour être détectée de manière certaine par le jury.

Ces expériences démontrent que le type de préparation des levures inertées, soit par traitement enzymatique, soit par traitement physico-chimique, soit par traitement thermique peut avoir une influence sur la présence de la fraction peptidique édulcorante permettant d'augmenter la sapidité des vins. Selon le traitement auquel la préparation de levure est soumis, la préparation de levure inertée obtenue est plus ou moins riche en la fraction peptidique édulcorante.

### 4- Seuil de perception de la préparation de levures inertées dans différents vins.

La préparation D de levures inertées a été additionnée à différents types de vins aux doses de 30, 50 et 70 g/hl. L'impact sensoriel de ces différents traitements est mesuré par des tests de dégustations triangulaires opposant les vins témoin aux vins additionnés de ces préparations de levures inertées. Un jury de neuf dégustateurs participe à ces tests triangulaires.

Une analyse statistique est réalisée afin de déterminée les réponses significatives. Pour un jury de neuf dégustateurs, il faut un minimum de sept bonnes réponses c'est à dire 78 % de réponses exactes pour que la différence soit significative au seuil de 5%.

Un exemple de ces résultats est donné au tableau IV.

**Tableau VI : Seuil de perception de la préparation de levures inertées dans différents vins**

| | 30 g/hL | | 50g/hL | | 70 g/hL | |
|---|---|---|---|---|---|---|
| Types de vins | Réponses exactes (%) | Différences significatives | Réponses exactes (%) | Diffèrences signifi catives | réponses exactes (%) | Diffèrences signifi catives |
| Vin blanc Chardonnay 2003 | 56 | non | 78 | oui | 78 | oui |
| Vin rouge Cabernet Sauvignon 2003 | 45 | non | 56 | non | 78 | oui |
| Vin blanc de Sauvignon 2003 | 78 | oui | 78 | oui | 78 | oui |
| Vin rouge de Merlot 2003 | 56 | non | 78 | oui | 78 | oui |
| Vin rouge de cabernet sauvignon/me rlot 2002 | 45 | non | 56 | oui | 78 | oui |

Dans tous les exemples du tableau VI, à l'exception du vin rouge Cabernet Sauvignon 2003, la qualité gustative du vin est améliorée pour un ajout de 50 g/hl de préparation de levures inertées. La qualité gustative du Vin rouge Cabernet Sauvignon 2003 est améliorée dès l'ajout de 70 g/hl de préparation de levures inertées. Par qualité gustative améliorée, on entend une augmentation de la sucrosité.

L'augmentation de la sapidité du vin est donc obtenue par ajout de quantités faibles de préparations de levures inertées contenant la fraction sapide de l'invention.

### II- Purification et séquençage des peptides contenus dans la fraction sapide

La fraction peptidique sapide 0.5-3 kDa, issue des préparations de levures inertées, est purifiée par chromatographie liquide haute performance (Spectrasystem AS 1000) de tamisage moléculaire sur colonne Superdex peptide HR 10/30.

La fraction peptidique sapide éluée au temps de rétention 34 minutes est collectée.

La fraction est ensuite à nouveau purifiée par HPLC sur colonne C18RP selon les conditions suivantes :
Colonne Lichrospher RP18 5µm 250 x 4.6 mm
Eluant
Tampon A : Acétonitrile /Eau (80/20) ;
Tampon B : Acétonitrile/Eau (8/92)

| Grandient : | temps (min) | %A | %B |
|---|---|---|---|
| | 0 | 15 | 85 |
| | 10 | 40 | 60 |
| | 15 | 81 | 19 |
| | 17 | 81 | 19 |
| | 18 | 81 | 19 |
| | 20 | 17 | 83 |
| | 22 | 17 | 83 |

Volume d'injection 100 µL
Débit 1 ml/min
Détection 200 nm

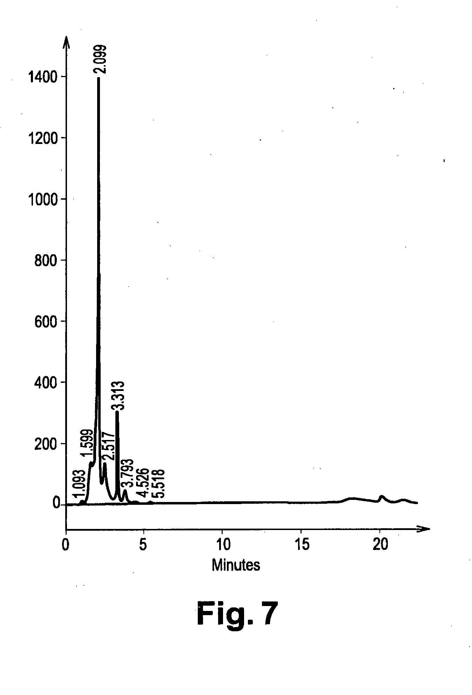

La fraction sapide est éluée au temps de rétention de 2.10 +/-0.1 min (figure 7).

Une cinquantaine d'injections sont réalisées et la fraction sapide ainsi purifiée est collectée et assemblée puis évaporée sous vide et lyophilisée.

L'extrait sec obtenu est analysé par chromatographie liquide couplée à un détecteur de masse MS/MS.

Une interrogation contre une banque de levures est ensuite réalisée afin d'identifier les protéines à l'origines des peptides isolées.

Les résultats du séquençage montre que la fraction sapide contient vingt neuf peptides de séquences respectives SEQ ID N°1, SEQ ID N°2, SEQ ID N°3, SEQ ID N°4, SEQ ID N°5, SEQ ID N°6_{;} SEQ ID N°7, SEQ ID N°8, SEQ ID N°9, SEQ ID N°10, SEQ ID N°11, SEQ ID N°12, SEQ ID N°13, SEQ ID N°14, SEQ ID N°15, SEQ ID N°16, SEQ ID N°17, SEQ ID N°18, SEQ ID N°19, SEQ ID N°20, SEQ ID N°21, SEQ ID N°22, SEQ ID N°23, SEQ ID N°24, SEQ ID N°25, SEQ ID N°26, SEQ ID N°27, SEQ ID N°28 ou SEQ ID N°29, issus de neufs protéines de *Saccharomyces cerevisiae.*

Plus précisément, les neufs protéines identifiées sont respectivement
- une heat shock protéine 12 kDa, pour les peptides selon les séquences SEQ ID N°1, SEQ ID N°2, SEQ ID N°3, SEQ ID N°4, SEQ ID N°5, SEQ ID N°6, SEQ ID N°7, SEQ ID N°8, SEQ ID N°9, SEQ ID N°10, et SEQ ID N°11 ;
- une Phosphoglycerate kinase (EC 2.7.2.3), pour les peptides selon les séquences SEQ ID N°12, SEQ ID N°13, SEQ ID N°14, SEQ ID N°15, et SEQ ID N°16 ;
- une Enolase 1 (EC 4.2.1.11) (2-phosphoglycerate dehydratase) (2-phospho-D- glycerase), pour les peptides selon les séquences SEQ ID N°17, SEQ ID N°18, SEQ ID N°19, et SEQ ID N°21 ;
- une Phosphoglycerate mutase 1 (EC 5.4.2.1) (Phosphoglyceromutase 1) (PGAM 1) (MPGM) pour les peptides selon les séquences SEQ ID N°20a, SEQ ID N°22, et SEQ ID N°23 ;
- un facteur d'élongation 1-alpha (EF-1-alpha), pour les peptides de séquences SEQ ID N°24 et SEQ ID N°25 ;
- une Superoxide dismutase [Cu-Zn] (EC 1.15.1.1), pour le peptide selon la séquence SEQ ID N°26 ;
- un précurseur mitochondrial Rotenone-insensitive NADH-ubiquinone oxidoreductase, pour le peptide selon la séquence SEQ ID N°27 ;
- une protéine ribosomale 60S L26-A (YL33), pour le peptide selon la séquence SEQ ID N°28 ;
- un ORF YDL223c du chromosome IV, pour le peptide selon la séquence SEQ ID N°29.

Les composés peptidiques édulcorants de la fraction sapide ont au moins 60% de similarité avec l'une des ces séquences SEQ ID N°1, SEQ ID N°2, SEQ ID N°3, SEQ ID N°4, SEQ ID N°5, SEQ ID N°6, SEQ ID N°7, SEQ ID N°8, SEQ ID N°9, SEQ ID N°10, SEQ ID N°11, SEQ ID N°12, SEQ ID N°13, SEQ ID N°14, SEQ ID N°15, SEQ ID N°16, SEQ ID N°17, SEQ ID N°18, SEQ ID N°19, SEQ ID N°20, SEQ ID N°21, SEQ ID N°22, SEQ ID N°23, SEQ ID N°24, SEQ ID N°25, SEQ ID N°26, SEQ ID N°27, SEQ ID N°28 ou SEQ ID N°29.

Ces composés peptidiques, isolés ou en mélange, présentent les propriétés sucrantes attribuées à la fraction sapide comprise entre 05 et 3 kDA initialement isolée à partir de préparations de levures inertées et caractérisée par HPLC sur TSK G2000sw au temps de rétention de 34 minutes ou sur Superdex Peptide HR 10/30 au temps de rétention de 34 minutes, selon les conditions de séparation décrites.

### Bibliographie

Chae H. J., Hyun J.; In M-J. Utilization of brewer's cells for the production of food-grade yeast extract. Part 1 : effect of différent enzymatic treatments on solid and protein recovery and flavor characteristics. Bioresource Technology. 2001, 76, 253-258
Chatonnet P.; Dubourdieu D. et Boidron J.N. Incidences des conditions de fermentation et d'élevage des vins blancs secs en barriques sur leur composition en substances cédées par le bois de chêne. Sci. Alim. 1992, 12, 665-685.
Desportes C. ; Charpentier M. ; Duteurtre B. ; Maujean A. and Duchiron F. Isolation, Identification and organoleptic characterization of low-molecular weight peptides from white wine. Am. J. Enol. Vitic. 2001, 52 (4), 376-380
Escot S.; Feuillat M. ; Dulau L. et Charpentier C. Release of polysaccharides by yeasts and the influence of released polysaccharides on colour stability and wine astringency. Austr. J. of Grape and Wine Res. 2001, 7, 153-156
Fornairon C.; Mazauric J.P.; Salmon J.M.; Moutounet M. Observations on oxygen consumption during maturation of wine lees. J. Int. Sci. Vigne Vin. 1999, 33 (2), 79-86.
Gibbs B. F. ; Inteaz A. and Mulligan C. Sweet and taste-modifying proteins : a review. Nutrition Research. 1996, 16 (9), 1619-1630
Lavigne V.; Dubourdieu D. Mise en évidence et interprétation de l'aptitude des lies à éliminer certains thiols volatils du vin. J. Int. Sci. Vigne Vin. 1996, 30 (4), 201-206
Lavigne-Cruège V.; Cutzach I.; D Dubourdieu D. Interprétation chimique du vieillissement aromatique défectueux des vins blancs. Incidence des modalités d'élevage. In : Actualités oenologiques 1999. VIème Symposium International d'OEnologie 10-12 Juin 1999. Bordeaux*.*
Ledoux V.; Dulau L.; Dubourdieu D. Interprétation de l'amélioration de la stabilité protéique des vins au cours de l'élevage sur lies. J. Int. Sci. Vigne Vin. 1992, 26 (4), 239-251
Llaubères R.M.; Dubourdieu D.; Villetaz J.C. Exocellular polysaccharides from Saccharomyces in wines. J. Sci. Food Agric. 1987, 41, 277-286.
Moine-Ledoux V.; Perrin A.; Paladin I.; Dubourdieu D. Premiers résultats de stabilisation tartrique des vins par addition de mannoprotéines purifiées (Mannostab ™). J. Int. Sci. Vigne Vin, 1997, 31 (1), 23-31.
Rosen H. A modified ninhydrin colorimetric analysis for amino acids. Arch. Biochem.Biophys. 1957, 67, 102-115
Tominaga T.; Blanchard L.; Darriet P.; Dubourdieu D. A powerful aromatic volatile thiol, 2-furanmethanthiol, exhibiting roast coffe aroma in wines made from several Vitis vinifera grapes varieties. J. Agric. Food Chem. 2000, 48, 1799-1802.

## Revendications

1. Procédé de traitement d'une boisson destinée à la consommation d'un être humain ou animal en vue d'améliorer la sapidité liée à la sucrosité de ladite boisson, **caractérisé en ce qu'**on ajoute dans ladite boisson une fraction peptidique sapide comprenant au moins un composé peptidique édulcorant d'origine levurienne présentant un poids moléculaire compris entre 0,5 et 3 kDa et au moins 95% de similarité avec au moins l'une des séquences peptidiques SEQ ID N°1, SEQ ID N°2, SEQ ID N°3, SEQ ID N°4, SEQ ID N°5, SEQ ID N°6, SEQ ID N°7, SEQ ID N°8, SEQ ID N°9, SEQ ID N°10, SEQ ID N°11.

2. Procédé de traitement selon la revendication 1, **caractérisé en ce que** la fraction peptidique sapide est ajoutée à la boisson sous la forme d'une préparation de levures inertées par traitement enzymatique et/ou physico-chimique.

3. Procédé de traitement selon la revendication 2, **caractérisé en ce que** les levures de la préparation de levures inertées sont des levures présentes dans les lies de vins.

4. Procédé de traitement selon l'une des revendications 2 à 3, **caractérisé en ce que** les levures de la préparation de levures inertées appartiennent à l'espèce *Saccharomyces cerevisiae.*

5. Procédé de traitement selon l'une des revendications 2 à 4, **caractérisé en ce qu'**on ajoute au moins 50g, +/- 10g, de préparation de levures inertées par hectolitre de boisson.

6. Procédé de traitement selon l'une des revendications 1 à 5, **caractérisé en ce que** le composé peptidique édulcorant présente au moins 98% de similarité avec au moins l'une des séquences peptidiques SEQ ID N°1, SEQ ID N°2, SEQ ID N°3, SEQ ID N°4, SEQ ID N°5, SEQ ID N°6, SEQ ID N°7, SEQ ID N°8, SEQ ID N°9, SEQ ID N°10, SEQ ID N°11.

7. Composé peptidique édulcorant d'origine levurienne, **caractérisé en ce qu'**il présente un poids moléculaire compris entre 0.5 et 3 kDa et au moins 95% de similarité avec au moins l'une des séquences peptidiques SEQ ID N°1, SEQ ID N°2, SEQ ID N°3, SEQ ID N°4, SEQ ID N°5, SEQ ID N°6, SEQ ID N°7, SEQ ID N°8, SEQ ID N°9, SEQ ID N°10, SEQ ID N°11.

8. Composé peptidique édulcorant selon la revendication 7, **caractérisé en ce qu'**il présente un seuil de perception dans une solution hydroalcoolique à 12%, à 16 mg/L +/- 5mg/L.

9. Composé peptidique édulcorant selon l'une des revendications 7 à 8, **caractérisé en ce qu'**il présente au moins 98% de similarité avec au moins l'une des séquences peptidiques SEQ ID N°1, SEQ ID N°2, SEQ ID N°3, SEQ ID N°4, SEQ ID N°5, SEQ ID N°6, SEQ ID N°7, SEQ ID N°8, SEQ ID N°9, SEQ ID N°10, SEQ ID N°11.

10. Préparation de levures inertées par traitement enzymatique et/ou physico-chimique **caractérisée en ce qu'**elle contient au moins un composé peptidique édulcorant présentant un poids moléculaire compris entre 0.5 et 3 kDa et au moins 95% de similarité avec au moins l'une des séquences peptidiques SEQ ID N°1, SEQ ID N°2, SEQ ID N°3, SEQ ID N°4, SEQ ID N°5, SEQ ID N°6, SEQ ID N°7, SEQ ID N°8, SEQ ID N°9, SEQ ID N°10, SEQ ID N°11.

11. Préparation de levures inertées selon la revendication 10, **caractérisée en ce que** le composé peptidique édulcorant présente au moins 98% de similarité avec au moins l'une des séquences peptidiques SEQ ID N°1, SEQ ID N°2, SEQ ID N°3, SEQ ID N°4, SEQ ID N°5, SEQ ID N°6, SEQ ID N°7, SEQ ID N°8, SEQ ID N°9, SEQ ID N°10, SEQ ID N°11.

## Patentansprüche

1. Verfahren zur Behandlung eines Getränks, das zum Verzehr von einem Menschen oder einem Tier bestimmt ist, um die mit der Süße des Getränks verbundene Schmackhaftigkeit zu verbessern, **dadurch gekennzeichnet, dass** man dem Getränk eine schmackhafte Peptidfraktion zusetzt, die mindestens eine aus der Hefe stammende süßende Peptidverbindung mit einem Molekulargewicht zwischen 0,5 und 3 kDa und mindestens 95% Ähnlichkeit zu mindestens einer der Peptidsequenzen SEQ. ID. Nr.: 1, SEQ. ID. Nr.: 2, SEQ. ID. Nr.: 3, SEQ. ID. Nr.: 4, SEQ. ID. Nr.: 5, SEQ. ID. Nr.: 6, SEQ. ID. Nr.: 7, SEQ. ID. Nr.: 8, SEQ. ID. Nr.: 9, SEQ. ID. Nr.: 10, SEQ. ID. Nr.: 11 aufweist.

2. Verfahren zur Behandlung nach Anspruch 1, **dadurch gekennzeichnet, dass** die schmackhafte Peptidfraktion dem Getränk in Form eines Präparats von mittels enzymatischer Behandlung und/oder chemisch-physikalischer Behandlung inaktivierten Hefen handelt.

3. Verfahren zur Behandlung nach Anspruch 2, **dadurch gekennzeichnet, dass** es sich bei den Hefen des Präparats von inaktivierten Hefen um Hefen, die in Weintrub vorhanden sind, handelt.

4. Verfahren zur Behandlung nach einem der Ansprüche 2 bis 3, **dadurch gekennzeichnet, dass** die Hefen des Präparats von inaktivierten Hefen zu der Art *Saccharomyces cerevisiae* gehören.

5. Verfahren zur Behandlung nach einem der Ansprüche 2 bis 4, **dadurch gekennzeichnet, dass** man mindestens 50 g +/- 10 g Präparat von inaktivierten Hefen pro Hektoliter Getränk zusetzt.

6. Verfahren zur Behandlung nach einem der Ansprüche 1 bis 5, **dadurch gekennzeichnet, dass** die süßende Peptidverbindung mindestens 98% Ähnlichkeit zu mindestens einer der Peptidsequenzen SEQ. ID. Nr.: 1, SEQ. ID. Nr.: 2, SEQ. ID. Nr.: 3, SEQ. ID. Nr.: 4, SEQ. ID. Nr.: 5, SEQ. ID. Nr.: 6, SEQ. ID. Nr.: 7, SEQ. ID. Nr.: 8, SEQ. ID. Nr.: 9, SEQ. ID. Nr.: 10, SEQ. ID. Nr.: 11 aufweist.

7. Aus Hefe stammende süßende Peptidverbindung, **dadurch gekennzeichnet, dass** sie ein Molekulargewicht zwischen 0,5 und 3 kDa und mindestens 95% Ähnlichkeit zu mindestens einer der Peptidsequenzen SEQ. ID. Nr.: 1, SEQ. ID. Nr.: 2, SEQ. ID. Nr.: 3, SEQ. ID. Nr.: 4, SEQ. ID. Nr.: 5, SEQ. ID. Nr.: 6, SEQ. ID. Nr.: 7, SEQ. ID. Nr.: 8, SEQ. ID. Nr.: 9, SEQ. ID. Nr.: 10, SEQ. ID. Nr.: 11 aufweist.

8. Süßende Peptidverbindung nach Anspruch 7, **dadurch gekennzeichnet, dass** sie in einer zwölfprozentigen wässrig-alkoholischen Lösung eine Wahrnehmungsgrenze von 16 mg/l +/- 5 mg/l aufweist.

9. Süßende Peptidverbindung nach einem der Ansprüche 7 bis 8, **dadurch gekennzeichnet, dass** sie mindestens 98% Ähnlichkeit zu mindestens einer der Peptidsequenzen SEQ. ID. Nr.: 1, SEQ. ID. Nr.: 2, SEQ. ID. Nr.: 3, SEQ. ID. Nr.: 4, SEQ. ID. Nr.: 5, SEQ. ID. Nr.: 6, SEQ. ID. Nr.: 7, SEQ. ID. Nr.: 8, SEQ. ID. Nr.: 9, SEQ. ID. Nr.: 10, SEQ. ID. Nr.: 11 aufweist.

10. Präparat von mittels enzymatischer Behandlung und/oder chemisch-physikalischer Behandlung inaktivierten Hefen, **dadurch gekennzeichnet, dass** es mindestens eine süßende Peptidverbindung mit einem Molekulargewicht zwischen 0,5 und 3 kDa und mindestens 95% Ähnlichkeit zu mindestens einer der Peptidsequenzen SEQ. ID. Nr.: 1, SEQ. ID. Nr.: 2, SEQ. ID. Nr.: 3, SEQ. ID. Nr.: 4, SEQ. ID. Nr.: 5, SEQ. ID. Nr.: 6, SEQ. ID. Nr.: 7, SEQ. ID. Nr.: 8, SEQ. ID. Nr.: 9, SEQ. ID. Nr.: 10, SEQ. ID. Nr.: 11 aufweist.

11. Präparat von inaktivierten Hefen nach Anspruch 10, **dadurch gekennzeichnet, dass** die süßende Peptidverbindung mindestens 98% Ähnlichkeit zu mindestens einer der Peptidsequenzen SEQ. ID. Nr.: 1, SEQ. ID. Nr.: 2, SEQ. ID. Nr.: 3, SEQ. ID. Nr.: 4, SEQ. ID. Nr.: 5, SEQ. ID. Nr.: 6, SEQ. ID. Nr.: 7, SEQ. ID. Nr.: 8, SEQ. ID. Nr.: 9, SEQ. ID. Nr.: 10, SEQ. ID. Nr.: 11 aufweist.

## Claims

1. A processing method for processing a beverage destined for human or animal consumption with the aim of increasing the palatability associated to the sweetness of said beverage, **characterised in that** a taste-modifying peptide fraction comprising at least a peptide sweetener of yeast origin having a molecular weight comprised between 0.5 and 3 kDa and presenting at least 95 % similarity to at least one of the peptide sequences SEQ ID N°1, SEQ ID N°2, SEQ ID N°3, SEQ ID N°4, SEQ ID N°5, SEQ ID N°6, SEQ ID N°7, SEQ ID N°8, SEQ ID N°9, SEQ ID N°10, SEQ ID N°11, is added to said beverage.

2. A processing method according to claim 1, **characterised in that** the taste-modifying peptide fraction is added to the beverage in the form of a yeast preparation inerted by enzymatic and/or physical-chemical treatment.

3. A processing method according to claim 2, **characterised in that** the yeasts of the inerted yeast preparation are yeasts present in wine lees.

4. A processing method according to one of claims 2 to 3, **characterised in that** the yeasts of the inerted yeast preparation belong to the *Saccharomyces cerevisiae* species.

5. A processing method according to one of claims 2 to 4, **characterised in that** at least 50g, +/- 10g, of the inerted yeast preparation are added per hectolitre of the beverage

6. A processing method according to one of claims 1 to 5, **characterised in that** the peptide sweetener presents at least 98 % similarity to at least one of the peptide sequences SEQ ID N°1, SEQ ID N°2, SEQ ID N°3, SEQ ID N°4, SEQ ID N°5, SEQ ID N°6, SEQ ID N°7, SEQ ID N°8, SEQ ID N°9, SEQ ID N°10, SEQ ID N°11.

7. A peptide sweetener of yeast origin, **characterised in that** its molecular weight is comprised between 0.5 and 3 kDa and it presents at least 95 % similarity to at least one of the peptide sequences: SEQ ID N°1, SEQ ID N°2, SEQ ID N°3, SEQ ID N°4, SEQ ID N°5, SEQ ID N°6, SEQ ID N°7, SEQ ID N°8, SEQ ID N°9, SEQ ID N°10, SEQ ID N°11.

8. A peptide sweetener according to claim 7, **characterised in that** its perception threshold in a 12% hydroalcoholic solution is 16 mg/L +/-5 mg/L.

9. A peptide sweetener according to one of claims 7 to 8, **characterised in that** it presents at least 98 % similarity to at least one of the peptide sequences SEQ ID N°1, SEQ ID N°2, SEQ ID N°3, SEQ ID N°4, SEQ ID N°5, SEQ ID N°6, SEQ ID N°7, SEQ ID N°8, SEQ ID N°9, SEQ ID N°10, SEQ ID N°11.

10. A preparation of yeasts inerted by enzymatic and/or physical-chemical treatment **characterised in that** it contains at least a peptide sweetener with a molecular weight comprised between 0.5 and 3 kDa and at least 95 % similarity to at least one of the peptide sequences SEQ ID N°1, SEQ ID N°2, SEQ ID N°3, SEQ ID N°4, SEQ ID N°5, SEQ ID N°6, SEQ ID N°7, SEQ ID N°8, SEQ ID N°9, SEQ ID N°10, SEQ ID N°11.

11. An inerted yeast preparation according to claim 10, **characterised in that** the peptide sweetener presents at least 98 % similarity to at least one of the peptide sequences SEQ ID N°1, SEQ ID N°2, SEQ ID N°3, SEQ ID N°4, SEQ ID N°5, SEQ ID N°6, SEQ ID N°7, SEQ ID N°8, SEQ ID N°9, SEQ ID N°10, SEQ ID N°11.
